# FASCICULE DE BREVET EUROPEEN

(11) **EP 3 174 402 B1**
(45) Date de publication et mention de la délivrance du brevet: **16.10.2019**
(21) Numéro de dépôt: 15752957.9
(22) Date de dépôt: 30.07.2015
(51) Int. Cl.: A23C 9/16, A23C 1/12

(54) **PROCEDE DE FABRICATION DE POUDRE LAITIERE**
VERFAHREN ZUR HERSTELLUNG MILCHPULVER
PROCESS FOR THE MANUFACTURE OF DAIRY POWDER

(30) Priorité: 31.07.2014 FR 1457413
(43) Date de publication de la demande: 07.06.2017
(73) Titulaire: AMBIENTE E NUTRIZIONE S.r.l., 20089 Rozzano (MI) (IT)
(72) Inventeur: GARREAU, Daniel, F-53470 Commer (FR); SCHUCK, Pierre, F-35131 Chartres De Bretagne (FR); DOLIVET, Anne, F-35520 La Meziere (FR); SAI, Gaëlle, F-35650 Le Rheu (FR); MEJEAN, Serge, F-35132 Vezin Le Coquet (FR); JEANTET, Romain, F-35000 Rennes (FR); VEZZANI, Massimo, I-20090 Trezzano S/ Naviglio (IT)
(74) Mandataire: Ferreccio, Rinaldo
(86) Numéro de dépôt international: PCT/EP2015/067585
(87) Numéro de publication internationale: WO 2016/016397

(56) Documents cités:
- WO-A1-03/086091
- CN-A- 102 986 877
- FR-A- 1 325 776
- GB-A- 1 436 777
- US-A1- 2009 304 864
- US-B1- 6 335 045

## Description

### DOMAINE DE L'INVENTION

La présente invention concerne un nouveau procédé d'obtention d'une poudre laitière.

### ART ANTERIEUR

Le marché des poudres laitières est en pleine expansion, notamment pour la production de laits infantiles destinés à l'alimentation des nourrissons. Les poudres laitières sont également utilisées dans de nombreux produits issus de l'industrie agro-alimentaire, tels que les confiseries, la pâtisserie, le fromage industriel, les mélanges secs pour les crêpes, biscuits ou boissons, les soupes, les produits fermentés du lait, les glaces, crèmes glacées et desserts laitiers glacés.

Ces poudres laitières peuvent être obtenues à partir de lait, écrémé, semi-écrémé ou entier, de lactosérum ou de perméat issu de filtration membranaire.

Les poudres laitières sont également beaucoup utilisées dans des lieux et/ou des situations où le stockage ou le transport du lait frais est difficile, car le lait se conserve beaucoup plus longtemps sous cette forme.

Les deux étapes principales de préparation des poudres laitières sont la concentration et le séchage.

La concentration se fait par évaporation et notamment par évaporation sous vide en film mince.

Le séchage se fait classiquement par pulvérisation/atomisation: le produit laitier préalablement concentré est finement pulvérisé à l'aide d'une turbine ou buse pression dans un courant d'air chaud (vers 150°C-200°C) à l'intérieur d'une tour de séchage. L'air chaud sert de vecteur de chaleur et d'humidité. L'évaporation de l'eau se fait par diffusion instantanée, ce qui provoque le refroidissement de l'air (vers 90°C),

Plus précisément, certains procédés traditionnels de fabrication de poudres laitières, à partir de lactosérum ou de perméat issu de la filtration membranaire de lait ou de lactosérum comprenant une étape de séchage par atomisation comportent les 5 étapes suivantes (schéma 1) :
1. Concentration du produit jusqu'à 60 % d'extrait sec (ES) par évaporation sous vide ;
2. Cristallisation en cuves pendant une durée allant de 4 à 12 heures, à une température allant de 25 °C à 30 °C ;
3. Séchage par atomisation pour obtenir un ES à 96 % ;
4. Séchage final jusqu'à 97 % d'ES puis refroidissement à une température inférieure à 35 °C ;
5. Répartition granulométrique par tamisage et broyage.

Il existe une variante du procédé traditionnel (schéma 2) qui consiste à réaliser le séchage par atomisation jusqu'à 88 % d'ES (au lieu de 96 % d'ES) puis à rajouter une seconde étape de cristallisation sur bande à température ambiante avant une étape de séchage final jusqu'à 97 % d'ES.

Ces procédés présentent l'inconvénient de nécessiter une étape de séchage par atomisation. Or, cette étape représente l'opération la plus énergivore de ces procédés de fabrication de poudres laitière. Elle peut en effet représenter à elle seule de 25 % à 60 % du coût énergétique total de ces procédés. En d'autres termes, l'énergie pour éliminer 1 kg d'eau par séchage par atomisation est comprise entre 1,5 et 3 kg de vapeur soit 10 à 30 fois plus que l'élimination d'eau par évaporation sous vide.

Il existe en conséquence un besoin, dans l'état de la technique, pour un procédé de préparation de poudres laitières plus économique en termes de dépense énergétique, et en conséquence dépourvu de cette étape de séchage par atomisation.

Un autre procédé intitulé « procédé Tixotherm® » (schéma 3), se caractérise par le fait que les étapes de surconcentration et de cristallisation sont réalisées en même temps, dans le même équipement. Le produit de départ est à 60 % d'ES et est traité pour aboutir, sous forme cristallisée, à 87 % d'extrait sec. Le concentré est alors une pâte qui est refroidie, séchée sur lit fluidisé jusqu'à obtention d'un concentré à 98 % d'ES. Ce procédé est décrit dans la revue de J. Pisecky (Spray Drying in the Cheese Industry, Int. Dairy J. (2005), 15 :531-536) ainsi que dans la demande de brevet WO 03/086091.

Ce procédé, qui sera dénommé « procédé Tixotherm » dans tout le reste de la demande, présente l'inconvénient d'aboutir à un "concentré cristallisé" pâteux et non à une poudre.

Avec le procédé Tixotherm®, l'étape de concentration jusqu'à 87 % d'extrait sec doit être réalisée à très haute température, ce qui est susceptible d'entrainer une dénaturation des protéines du lait, et en particulier les protéines du lactosérum, contenues dans les produits traités. Ainsi, la « poudre » obtenue par ce procédé a tendance à former des agrégats, ce qui n'est pas souhaitable dans un procédé destiné à l'obtention d'une poudre laitière.

La formation de tels agrégats entraine une altération de l'aptitude de la poudre à s'écouler librement, ce qui rend difficile le stockage, le mélange, le transfert ou la compression de ces poudres.

Le brevet FR 1 325 776 décrit un procédé de séchage d'un lactosérum concentré. Le lactosérum de départ est d'abord concentré jusqu'à un taux de solides totaux supérieur à 65%, par ex. 75%; aucune cristallisation n'est effectuée; lorsque la masse atteint la concentration élevée de 85%, le produit est extrudé et séché, obtenant un produit avec un niveau de solides totaux de 95%. Les auteurs n'étudient aucune propriété rhéologique / hygroscopique du produit obtenu.

Le brevet US 6 335 045 décrit un procédé de concentration de produits liquides à de faibles niveaux de solides totaux, de l'ordre de 75 à 83%: le procédé veille tout particulièrement à éviter toute cristallisation indésirable pendant les phases de concentration.

La demande de brevet danois PA200700723 semble décrire un procédé dans lequel le liquide contenant du lactose de départ est agressivement concentré en une étape à 80-90 ° C pendant 2 heures jusqu'à un niveau de solides totaux supérieur à 75% pour former un gruau pompable; aucune cristallisation n'est effectuée tout au long du procédé; le gruau est ensuite refroidi, désintégré, séché et encore broyé pour obtenir des particules qui s'écoulent librement.

La demande de brevet WO 97/35486 décrit un procédé de transformation d'un lactosérum liquide en poudre. Le lactosérum d'origine (avec une teneur en matière sèche totale moyenne d'environ 6%) est directement concentré à 80 ° C jusqu'au niveau élevé de solides totaux de 65-80%; un courant secondaire de lactosérum cristallisé est ensuite ajouté et, après une ou plusieurs étapes de cristallisation, le produit est désintégré et séché en une poudre non agglomérante finale ayant 2% d'humidité; le procédé est caractérisé par un impact à haute température et par plusieurs opérations dans des conditions de forte viscosité.

La demande de brevet WO 03/075643 décrit un procédé de concentration pour des fluides contenant du lactose: après une première étape de concentration, réalisée dans des conditions de temps / température non divulguées, le produit est davantage concentré jusqu'à une teneur totale en solides de 70-80%; les auteurs doivent éviter toute cristallisation au cours des phases de concentration précoce; une cristallisation partielle, réalisée seulement au dernier stade du procédé combiné avec l'atomisation, conduit au produit final séché.

La demande de brevet WO03 / 0860901 décrit un procédé à consommation d'énergie élevée dans lequel un liquide contenant du lactose avec une teneur totale en matières solides comprise entre 40 et 75%, préalablement obtenu dans des conditions de temps / température non divulguées, est chauffé et en même temps agité fortement pour réduire la viscosité et permettre la cristallisation; on obtient un gruau pompable qui est éventuellement désintégré et enfin séché.

Il existe en conséquence un besoin, dans l'état de la technique, pour un procédé alternatif de préparation d'une poudre contenant du lactose, voire de préparation de poudres laitières ayant une qualité égale, voire supérieure, aux poudres obtenues via les procédés traditionnels communément employés.

### RESUME DE L'INVENTION

Ainsi, la présente invention fournit un procédé de préparation d'une poudre contenant du lactose, comprenant les étapes successives de :
a) Concentration d'un liquide comprenant du lactose choisi parmi du lait entier, du lait partiellement ou totalement écrémé; du lactosérum; et du perméat isu de filtrations membranaires de lait ou de lactosérum, pour obtenir un liquide concentré ayant une teneur en matière sèche allant de 55 % à 65 %; %, en utilisant un évaporateur à flot tombant, l'étape a) de concentration étant conduite sous vide à une température comprise entre 45 et 75°C, pour une durée allant de 10 à 20 minutes;
b) Surconcentration du concentré obtenu à l'issue de l'étape a) pour obtenir un surconcentré ayant une teneur en matière sèche allant de 75 % à 80 %, l'étape b) de surconcentration ayant une durée variant de 2 à 10 minutes;
c) Granulation du surconcentré obtenu à l'issue de l'étape b) par mélange dudit surconcentré avec une poudre contenant du lactose ayant une teneur en matière sèche d'au moins 95 %, jusqu'à obtenir unc poudre granulée ayant une teneur en matière sèche d'au moins 85 % d'extrait sec ; et
d) Séchage de la poudre granulée obtenue à l'issue de l'étape c) pour obtenir une poudre contenant du lactose ayant une teneur en matière sèche d'au moins 95 %.
où l'étape b) comprend :
- une étape b1) de surconcentration du concentré obtenu à l'issue de l'étape a), et
- une étape b2) de cristallisation du concentré obtenu à l'étape a) et/ou du surconcentré obtenu à l'issue de l'étape b1), selon que l'étape b2) a lieu antérieurement, simultanément ou postérieurement à l'étape b1).

Ledit procédé ne comprend pas d'étape de séchage par atomisation.

Selon un mode de réalisation, l'étape c) du procédé de l'invention est réalisée avec une poudre contenant du lactose à au moins 97 % d'extrait sec, de préférence au moins 98 % d'extrait sec.

Selon encore un mode de réalisation, le procédé de l'invention comprend une étape Cr de cristallisation sur bande à température ambiante entre les étapes c) et d).

Selon encore un mode de réalisation, le procédé selon l'invention se caractérise en ce que la poudre contenant du lactose obtenue à l'issue de l'étape d) est ensuite tamisée et broyée.

Selon un mode de réalisation, le procédé selon l'invention permet la préparation d'une poudre laitière présentant une teneur en matière sèche d'au moins 97 %, de préférence d'au moins 98 %, voire d'au moins 99 %.

### DESCRIPTION DES FIGURES

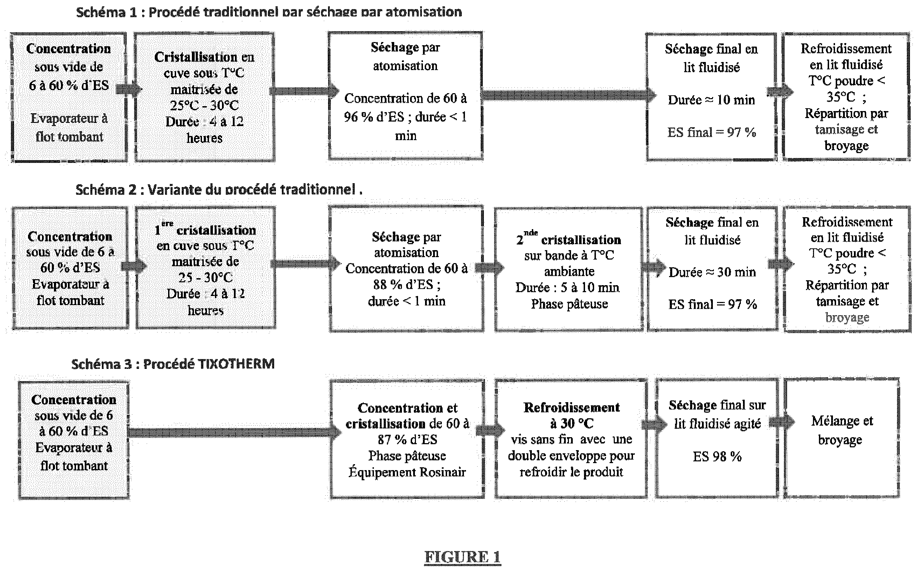

La Figure 1 représente les étapes des schémas 1, 2 et 3 des procédés connus de préparation de poudres laitières.

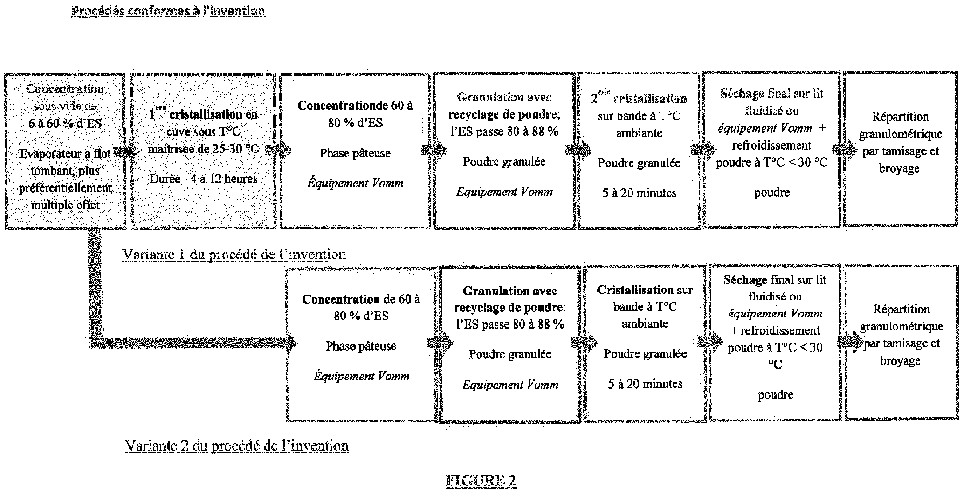

La Figure 2 représente les étapes schématiques de deux variantes de procédés conformes à l'invention.

### DESCRIPTION DETAILLEE DE L'INVENTION

Les inventeurs ont mis en oeuvre un nouveau procédé permettant la préparation d'une poudre contenant du lactose par séchage d'un liquide contenant du lactose, le procédé comprenant les étapes suivantes :
a) Concentration d'un liquide comprenant du lactose choisi parmi du lait entier, du lait partiellement ou totalement écrémé; du lactosérum; et du perméat issu de filtrations membranaires de lait ou de lactosérum, pour obtenir un liquide concentré ayant une teneur en matière sèche allant 55 % à 65 %, en utilisant un évaporateur à flot tombant, l'étape a) de concentration étant conduite sous vide à une température comprise entre 45 et 75°C, pour une durée allant de 10 à 20 minutes;
b) Surconcentration du concentré obtenu à l'issue de l'étape a) pour obtenir un produit surconcentré ayant une teneur en matière sèche allant de 75 % à 80 %, l'étape b) de surconcentration ayant une durée variant de 2 à 10 minutes;
c) Granulation du surconcentré obtenu à l'issue de l'étape b) par mélange dudit surconcentré avec une poudre contenant du lactose ayant une teneur en matière sèche d'au moins 95 %, jusqu'à obtenir une poudre granulée ayant une teneur en matière sèche d'au moins 85 %;
d) Séchage de la poudre granulée obtenue à l'issue de l'étape c) pour obtenir une poudre contenant du lactose ayant une teneur en matière sèche d'au moins 95 %.

L'étape b) du procédé comprend:
- une étape b1) de surconcentration du concentré obtenu à l'issue de l'étape a) et
- une étape b2) de cristallisation du concentré obtenu à l'étape a) et/ou du surconcentré obtenu à l'issue de l'étape b1), selon que l'étape b2) a lieu antérieurement, simultanément ou postérieurement à l'étape b1).

Ce procédé ne comprend pas d'étape de séchage par atomisation.

Selon la présente invention, on entend par « teneur en matière sèche » ou encore « extrait sec » d'un produit, exprimé en pourcentage, le rapport entre (i) la masse dudit produit après élimination de l'eau qu'il contient, notamment par étuvage, et (ii) la masse initiale dudit produit.

Selon la présente invention, on entend par « température ambiante » une température allant de 15 °C à 30 °C ; de préférence allant de 18 °C à 25 °C.

Selon la présente invention, on entend par « concentration » d'un liquide l'action de diminuer la teneur en eau de ce liquide. On appelle alors « concentré » le produit ainsi obtenu.

On entend par surconcentration le fait de diminuer la teneur en eau d'un concentré, c'est-à-dire d'un produit, en particulier d'un liquide, ayant déjà été concentré. On appelle alors « surconcentré » le produit ainsi obtenu.

Par « granulation », on entend selon l'invention une étape consistant à agglomérer les grains d'une poudre pour former des granulés dont le diamètre moyen est compris entre 400 et 600 µm.

Selon l'invention, il a été conçu un procédé de préparation d'une poudre contenant du lactose. Le procédé selon l'invention permet l'obtention d'une poudre contenant du lactose dans laquelle les inclusions d'air dans les particules de poudre sont minimisées. Ledit procédé selon l'invention ne comprend pas d'étape de séchage par pulvérisation/atomisation, puisque ce type d'étape présente une pluralité d'inconvénients dont (i) l'inconvénient de conduire à l'obtention d'une poudre dont les particules contiennent une part importante d'inclusions d'air, c'est-à-dire une poudre de masse volumique réduite, (ii) l'inconvénient de nécessiter l'apport d'une grande quantité d'énergie, (iii) l'inconvénient de nécessiter un investissement important pour abriter la tour de séchage et les systèmes de ventilation et de filtration associés, ainsi que (iv) l'impact en termes de nuisance sonore.

En outre, une étape de séchage par atomisation présente également des risques de collages de la poudre en cours de séchage, de formation de points colorés par la réaction de Maillard et également des risques d'explosions.

Ainsi, le procédé selon l'invention ne comprend pas d'étape de séchage par pulvérisation/atomisation.

L'absence d'une telle étape permet avantageusement qu'un procédé de préparation d'une poudre contenant du lactose selon l'invention consomme significativement moins d'énergie que les procédés connus comprenant une étape de séchage par atomisation/pulvérisation, à savoir entre 20 % et 40 % moins d'énergie.

Plus particulièrement, en l'absence d'une telle étape, le procédé selon l'invention permet de diminuer la consommation en vapeur de l'ordre de 60 %, ce qui conduit *in fine* à une économie de 40 % d'énergie thermique, et à une réduction de 15 % en termes de consommation électrique.

En outre, en l'absence de cette étape, la mise en oeuvre du procédé ne requiert pas d'infrastructure massive, tel qu'un bâtiment de 25 à 30 mètres de haut, pour loger la tour de séchage, ce qui conduit à une nouvelle économie de l'ordre de 40 % des dépenses liées à l'investissement immobilier relatif à une installation de séchage.

Le fait qu'une poudre contenant du lactose obtenue par le procédé selon l'invention possède une masse volumique accrue par rapport à une poudre obtenue par un procédé comprenant une étape de séchage par atomisation/pulvérisation confère un certain nombre d'avantages, tels qu'une diminution des coûts de conditionnement, de transport et de stockage, ainsi qu'une faible hygroscopicité (réduction du risque de mottage).

Comme cela sera décrit en détail ci-après, le procédé selon l'invention met avantageusement en oeuvre une étape c) de granulation du surconcentré obtenu à l'issue de l'étape b).

Les étapes a) de concentration et b) de surconcentration permettent l'obtention d'un surconcentré contenant du lactose dont les propriétés rhéologiques sont appropriées pour la mise en oeuvre optimale des étapes de granulation et de séchage.

### 1. Liquide contenant du lactose

Le produit de départ du procédé selon l'invention est un liquide contenant du lactose.

Le liquide contenant du lactose est choisi parmi du lait entier ; du lait partiellement ou totalement écrémé; du lactosérum ; et du perméat issu de filtrations membranaires de lait ou de lactosérum.

Le lactosérum est la partie liquide issue de la coagulation du lait. Le lactosérum est un liquide composé d'environ 94 % d'eau, de sucre (le lactose), de protéines et d'une quantité réduite de globules gras.

Selon le type de produit choisi, le produit de départ comprend des quantités variables de matière grasse, de protéines et de sels minéraux. Le produit de départ est notamment choisi selon l'utilisation qui est projetée pour la poudre produit final.

Un liquide contenant du lactose utilisé comme produit de départ d'un procédé selon l'invention peut être issu d'un lait de tout mammifère, et peut notamment être issu d'un lait de vache, de chèvre, de brebis, d'ânesse, de jument, de bufflonne, de yack, de chamelle, de dromadaire, ou encore de renne.

### 2. Etape a) d'un procédé selon l'invention

La première étape d'un procédé de préparation d'une poudre contenant du lactose de l'invention comprend la concentration d'un liquide comprenant du lactose pour obtenir un liquide concentré ayant une teneur en matière sèche allant de 55 % à 65 %.

Une concentration trop importante lors de cette étape, et par conséquent l'obtention d'un concentré ayant une teneur en matière sèche supérieur à 65 % à l'issue de l'étape a), présente l'inconvénient de conduire à l'obtention d'un produit dont les propriétés rhéologiques ou hygroscopiques sont inadaptées à la poursuite du procédé ou sont inadaptées pour l'obtention du produit final désiré.

Comme cela sera décrit plus loin, le procédé selon l'invention comprend une étape de cristallisation du produit intermédiaire préalablement à la réalisation de l'étape c) de surconcentration. Une concentration trop importante à l'étape a) conduit à l'obtention d'un produit intermédiaire ayant une teneur en matière sèche qui est trop élevée pour que la cristallisation dudit produit intermédiaire, lorsque l'étape de cristallisation est réalisée, conduise à un produit intermédiaire ayant le degré de cristallisation recherché.

Par ailleurs, une concentration du liquide à un pourcentage supérieure à 65 % durant l'étape a) du procédé conduit à une augmentation de la viscosité et de la pression osmotique du concentré obtenu. Il n'est alors pas possible de mener le procédé jusqu'au séchage.

Cette étape peut être réalisée par évaporation sous vide.

La concentration par évaporation sous vide consiste à placer le liquide contenant du lactose selon l'invention dans des conditions de température et de pression qui permettent l'évaporation de l'eau.

Avantageusement, la mise en oeuvre de l'évaporation sous vide permet de réduire la température mise en oeuvre afin de faire passer l'eau de l'état liquide à l'état gazeux, et en conséquence de limiter l'impact de cette température sur les constituants d'intérêt du liquide mis en oeuvre dans le procédé de l'invention, en particulier les protéines de lactosérum.

Selon l'invention, l'étape a) d'un procédé selon l'invention est réalisée par évaporation sous vide, dans un évaporateur tubulaire à flot tombant.

La durée de l'étape a) d'un procédé selon l'invention a une durée allant de 10 à 20 minutes.

En outre, il peut être noté qu'après 8 heures d'utilisation en continu du concentrateur mis en oeuvre et au plus jusqu'à 20h d'utilisation de cet équipement en continu, celui-ci doit être arrêté pour être nettoyé afin d'éviter les risques d'encrassement de l'appareil.

Cette durée de passage dans un concentrateur, et en général dans les équipements de traitement thermique, courte comparativement aux procédés de l'art antérieur, permet avantageusement de prévenir, ou au moins de limiter, les altérations thermiques des composés du lait, et notamment les réactions de lactosylation des protéines du lait et la réaction de Maillard, responsables de nombreux effets négatifs sur la valeur nutritionnelle d'une poudre de lait. Cela permet en conséquence de préserver les qualités du produit traité et ainsi d'améliorer la qualité de la poudre obtenue in fine. On rappellera que la réaction de Maillard est due à une réduction des sucres et en particulier du lactose par les amino-acides, ce qui entraine notamment l'apparition d'une coloration brune, raison pour laquelle la réaction de Maillard est généralement appelée réaction de brunissement.

Selon l'invention, l'étape a) est effectuée à une température variant d'une température minimale d'environ 45 °C à une température maximale d'environ 75 °C.

Selon l'invention, on entend par « environ 45 °C » une température d'au moins 45 °C, 46 °C, 47 °C, 48 °C, 49 °C ou 50 °C,

Selon l'invention, on entend par « environ 75 °C » une température d'au plus 75 °C, 74 °C, 73 °C, 72 °C, 71 °C ou 70 °C.

De préférence, l'étape a) est effectuée à une température variant entre 50 °C et 70 °C.

Selon un mode de réalisation, l'étape a) du procédé selon l'invention est réalisée par évaporation sous vide dans un évaporateur tubulaire à flot tombant et multiple effet.

Un évaporateur multiple effet consiste en un ensemble d'évaporateurs dans lesquels la vapeur générée dans un évaporateur (i) est réutilisée comme vapeur de chauffage dans l'évaporateur suivant (i+1).

Ce principe fonctionne sur la base d'un décalage des pressions de chacun des évaporateurs, de façon à obtenir dans l'évaporateur (i) une vapeur qui se condense à une température supérieure à la température d'ébullition de l'évaporateur (i+1).

Un évaporateur multiple peut être à co-courant, contre-courant ou courants parallèles.

Ainsi, un évaporateur multiple-effet selon l'invention comprend au moins deux évaporateurs en communication fluidique l'un avec l'autre et disposés en série.

L'utilisation de la vapeur générée dans un évaporateur (i) comme vapeur de chauffage dans l'évaporateur suivant (i+1) telle que décrite ci-dessus permet avantageusement d'économiser de l'énergie.

De préférence, la température à laquelle est effectuée l'étape a) suit un gradient de température décroissant du premier évaporateur jusqu'au dernier.

A titre illustratif, l'étape a) selon ce mode de réalisation peut être effectuée à une température variant de 55 à 75 °C dans le premier évaporateur.

A titre illustratif, l'étape a) selon ce mode de réalisation peut en outre être effectuée à une température variant de 45 à 55 °C dans le dernier évaporateur.

### 3. Etape b) d'un procédé selon l'invention

L'étape b) d'un procédé selon l'invention comprend une surconcentration du concentré obtenu à l'issue de l'étape a) jusqu'à obtenir un produit surconcentré ayant une teneur en matière sèche allant de 75 % à 80 %.

Selon une variante du procédé, le concentré obtenu à l'issue de l'étape a) du procédé de l'invention peut subir un temps de repos suivant la fin de l'étape a) et préalablement à la réalisation de l'étape b), lequel temps de repos a une durée variant de 4 à 12 heures avant la mise en oeuvre de l'étape b).

Selon une variante du procédé selon l'invention, aucun temps de repos du concentré n'est appliqué entre les étapes a) et b) du procédé de l'invention.

Selon le procédé de l'invention, l'étape b) de surconcentration comprend :
- une étape b1) de surconcentration du concentré obtenu à l'issue de l'étape a) pour obtenir un surconcentré ayant une teneur en matière sèche allant de 75 % à 80 %, et
- une étape b2) de cristallisation du concentré obtenu à l'issue de l'étape a) et/ou du surconcentré obtenu à l'issue de l'étape b1), selon que l'étape b2) est antérieure, simultanée ou postérieure à l'étape b1).

Ainsi, l'ordre d'exécution des étapes b1) et b2) est indifférent l'une par rapport à l'autre.

Lorsque l'étape b2) est effectuée avant l'étape b1), alors le concentré obtenu à l'issue de l'étape a) est d'abord soumis à une étape b2) de cristallisation puis le concentré cristallisé obtenu à l'issue de l'étape b2) est soumis à l'étape b1) de surconcentration.

L'étape b2) de cristallisation permet avantageusement de réduire l'hygroscopicité d'une poudre selon l'invention. Une réduction de l'hygroscopicité de ce produit intermédiaire entraîne aussi une réduction de l'hygroscopie du produit final, ce qui est un facteur impactant sur la stabilité de la poudre finale au cours du stockage.

On précise que la mise en oeuvre de l'étape b2) n'est utile que dans certaines variantes du procédé. Ainsi, notamment, pour la préparation d'une poudre finale contenant du lactose qui est destinée à être utilisée par exemple pour la préparation de desserts tels que de la crème glacée, il peut être avantageux de réaliser le procédé de l'invention dans une variante ne comprenant pas l'étape b2), de manière à fournir une poudre finale qui est hygroscopique.

On précise aussi que la réalisation de la variante du procédé comprenant l'étape b2) est préférentiellement choisie lorsque le liquide de départ contenant du lactose possède une teneur réduite en protéines, par exemple un perméat d'ultrafiltration de lait, ce qui conduit à un produit intermédiaire fortement hygroscopique.

En revanche, l'étape b2) peut être omise lorsque le liquide de départ contenant du lactose est un lait écrémé, lequel possède une forte teneur en protéines et conduit à un produit intermédiaire faiblement hygroscopique.

Ainsi, selon une variante du procédé, l'étape b) ne comprend que l'étape b1) susmentionnée, et l'étape b2) n'est pas réalisée.

Selon un mode de réalisation, l'étape b1) de surconcentration est réalisée :
- soit à l'issue de l'étape a) où le lactose n'est pas cristallisé,
- soit à l'issue de l'étape b2) où le lactose est cristallisé en cuve à une température comprise entre 25 °C et 30 °C, avantageusement pendant une durée de 4 à 12 heures.

La température à laquelle l'étape b) ou b1) est réalisée est de préférence constante.

L'étape b) ou b1) de surconcentration du concentré obtenu à l'issue de l'étape a) selon un procédé de l'invention peut être réalisée dans un évaporateur horizontal rotatif à couche mince, tel que celui proposé par la société VOMM sous le nom de Turbo-concentrateur.

L'étape b) ou b1) d'un procédé selon l'invention peut être effectuée à une température variant de 50 °C à 80 °C, cette température étant de préférence constante durant l'étape.

En outre, cette étape b) de surconcentration est effectuée en une durée variant de 2 à 10 minutes.

Dans cette étape également, cette courte durée de passage du concentré dans l'équipement confère les avantages mentionnés au point 2 ci-dessus en termes de préservation de la valeur nutritionnelle et par conséquent de la qualité de la poudre de lait obtenue in fine.

L'étape b2) de cristallisation est quant à elle préférentiellement réalisée en cuve.

Selon un mode de réalisation, le concentré ou surconcentré obtenu à l'issue de l'étape b) peut être laissé reposer pendant une durée variant de 1 minute à 10 minutes, préalablement à la mise en oeuvre de l'étape c).

Selon un mode de réalisation du procédé de l'invention, aucun temps de repos du concentré n'est appliqué entre les étapes b) et c) du procédé de l'invention.

Le surconcentré obtenu à l'issue de l'étape b), qui possède une teneur en matière sèche allant de 75 % à 80 %, forme avantageusement une pâte à la texture visqueuse mais pompable, qui peut ainsi être mise en oeuvre dans une étape c) d'un procédé selon l'invention.

Au contraire, un surconcentré qui aurait une teneur en matière sèche supérieure à 80 %, et notamment supérieure à 85 %, formerait une pâte difficile, voire impossible, à sécher ou à granuler, car possédant une viscosité trop élevée. Il ne pourrait par conséquent pas être mis en oeuvre dans les étapes suivantes du procédé de l'invention.

### 4. Etape c) d'un procédé selon l'invention

Un procédé de préparation d'une poudre comprenant du lactose selon l'invention est en particulier caractérisé en ce qu'il comprend une étape de granulation du surconcentré obtenu à l'issue de l'étape b) par mélange de ce surconcentré avec une poudre contenant du lactose ayant une teneur en matière sèche d'au moins 95 %, jusqu'à obtenir une poudre granulée ayant une teneur en matière sèche d'au moins 85 %.

Une étape de granulation selon l'invention est un passage obligé dans le procédé de l'invention pour aller à l'étape de séchage. Elle permet avantageusement d'augmenter la mouillabilité ainsi que la dispersibilité des poudres contenant du lactose obtenues à l'issue d'un procédé selon l'invention.

Cela conduit avantageusement à une poudre ayant de meilleures propriétés physiques (granulométrie, masse volumique, réhydratation, hygroscopicité...) comme discutées précédemment, et en conséquence à une poudre de meilleure qualité.

Selon un mode de réalisation particulier, l'étape c) du procédé selon l'invention est réalisée au sein d'un évaporateur horizontal rotatif à couche mince, tel que celui proposé par la société Vomm sous le nom de Turbo-granulateur.

La taille des granulés obtenus à l'issue de l'étape c) de l'invention est inférieure à 1 200 µm et est avantageusement comprise entre 400 µm et 600 µm et de préférence entre 450 µm et 550 µm.

La taille des granulés est mesurée selon la méthode décrite dans Schuck et al. (2012) (Les poudres laitières et alimentaires. Coordinateurs P. Schuck, A. Dolivet, R. Jeantet (Tec & Doc, Lavoisier, Paris), 2012). L'étape c) d'un procédé selon l'invention peut être effectuée à une température variant de 15 °C à 30 °C, cette température étant de préférence constante durant cette étape.

En outre, l'étape c) d'un procédé selon l'invention peut être effectuée avec un temps de passage dans l'équipement d'une durée variant de 1 à 10 minutes.

Selon un mode de réalisation préféré, la poudre contenant du lactose ayant une teneur en matière sèche d'au moins 95 %, à laquelle est mélangé le surconcentré obtenu à l'issue de l'étape b), a été obtenue antérieurement lors d'un précédent cycle de réalisation du procédé de préparation d'une poudre contenant du lactose de l'invention.

De préférence, cette étape du procédé selon l'invention peut être mise en oeuvre par mélange du surconcentré obtenu à l'issu de l'étape b) avec une poudre contenant du lactose ayant une teneur en matière sèche d'au moins 95 % en un ratio :
poudre contenant du lactose ayant une teneur en matière sèche d'au moins 95% surconcentré obtenu à l'issu de l'étape b)
compris entre 0,75:1 et 2:1, et est de préférence 1:1.

Selon un mode de réalisation, l'étape c) est réalisée avec une poudre contenant du lactose ayant une teneur en matière sèche d'au moins 97 %, de préférence une teneur en matière sèche d'au moins 98 %.

### 5. Etape Cr d'un procédé selon l'invention

Selon un mode de réalisation, un procédé de préparation d'une poudre contenant du lactose selon la présente invention comprend une étape Cr après l'étape c) et avant l'étape d) de ce procédé.

L'étape Cr consiste en une étape de cristallisation de la poudre granulée obtenue à l'issue de l'étape c).

Selon un mode de réalisation, l'étape Cr de cristallisation d'un procédé de l'invention est réalisée sur bande.

Les avantages liés à la mise en oeuvre de l'étape Cr selon l'invention sont discutés au point 3) ci-dessus relatif à l'étape b), et notamment à l'étape optionnelle b2) de cristallisation selon l'invention.

Ainsi selon le niveau d'hygroscopicité que l'on souhaite conférer à une poudre contenant du lactose obtenue via le procédé de l'invention, et plus particulièrement selon l'hygroscopicité du liquide contenant du lactose mis en oeuvre dans un procédé de l'invention, les étapes b2) et/ou Cr de l'invention peuvent être mises en oeuvre, ou aucune de ces deux étapes.

Selon un mode de réalisation, la poudre granulée obtenue à l'issue de l'étape c) peut être laissée reposer pendant une durée variant de 1 minutes à 10 minutes, préalablement à la mise en oeuvre de l'étape Cr).

Selon un mode de réalisation de l'invention, aucun temps de repos de la poudre granulée n'est appliqué entre les étapes c) et Cr du procédé de l'invention.

L'étape Cr d'un procédé selon l'invention peut être effectuée à une température variant de 15 °C à 30 °C. Cette étape est préférentiellement effectuée à température ambiante. La température à laquelle est effectuée l'étape Cr est de préférence constante.

En outre, l'étape Cr d'un procédé selon l'invention peut être effectuée pendant une durée variant de 5 à 20 minutes.

### 6. Etape d) d'un procédé selon l'invention

Le procédé selon l'invention comprend en outre une étape d) de séchage de la poudre granulée obtenue à l'étape c) ou Cr de l'invention jusqu'à obtenir une poudre ayant une teneur en matière sèche d'au moins 95 %.

Selon un mode de réalisation, la poudre granulée obtenue à l'issue de l'étape c) ou la poudre obtenue à l'issue de l'étape Cr) peut être laissée reposer pendant une durée variant de 1 minutes à 10 minutes, préalablement à la mise en oeuvre de l'étape d).

Selon une autre variante de réalisation de l'invention, aucun temps de repos de la poudre granulée n'est appliqué entre les étapes c) ou Cr et l'étape d) du procédé de l'invention.

De préférence, l'étape d) selon l'invention consiste en un séchage de la poudre granulée obtenue à l'étape c) ou Cr jusqu'à obtenir une poudre ayant une teneur en matière sèche ayant au moins 96 % d'extrait sec, notamment ayant une teneur en matière sèche d'au moins 97 %, plus préférentiellement une teneur en matière sèche d'au moins 98 %, voire une teneur en matière sèche d'au moins 99 %.

Selon un mode de réalisation, une étape d) d'un procédé de l'invention est réalisée sur un lit fluidisé ou dans un évaporateur horizontal rotatif à couche mince, tels que ceux proposés par la société Vomm sous le nom de Turbo-sécheur

Le produit obtenu à l'issue de l'étape d) est une poudre possédant entre 1 % et 4 % d'humidité, de préférence entre 2 % et 3 % d'humidité.

L'étape d) d'un procédé selon l'invention peut être effectuée à une température variant de 50 °C à 80 °C. Cette température est de préférence constante durant cette étape.

En outre, l'étape d) d'un procédé selon l'invention peut être effectuée avec un temps de passage sur l'équipement d'une durée variant de 5 à 30 minutes.

Selon un mode de réalisation, l'étape d) d'un procédé selon l'invention est suivie d'une étape de refroidissement de la poudre obtenue à une température, de préférence constante, inférieure à 30 °C.

Selon un mode de réalisation, la poudre obtenue à l'issue de l'étape d) peut être laissée reposer pendant une durée variant de 1 minute à 10 minutes, préalablement à la mise en oeuvre de l'étape de refroidissement.

Selon un mode de réalisation de l'invention, aucun temps de repos du produit n'est appliqué entre l'étape d) et l'étape de refroidissement du procédé de l'invention.

Selon un mode de réalisation, la poudre obtenue à l'issue de l'étape d) ou à l'issue de l'étape de refroidissement d'un procédé de l'invention est ensuite tamisée et broyée.

Selon un mode de réalisation, la poudre obtenue à l'issue de l'étape d) ou à l'issue de l'étape de refroidissement peut être laissée reposer pendant une durée variant de 1 minute à 10 minutes, préalablement à la mise en oeuvre de l'étape de tamisage et de broyage.

Selon un mode de réalisation de l'invention, aucun temps de repos de la poudre n'est appliqué entre l'étape d) ou l'étape de refroidissement le cas échéant, et l'étape de tamisage et de broyage.

Une partie de la poudre obtenue à l'issue de cette étape de tamisage et de broyage et/ou à l'issue de l'étape d) et/ou à l'issue de l'étape de refroidissement suivant l'étape d) pourra notamment être réutilisée dans l'étape c) de granulation d'un procédé conforme à l'invention.

Selon un mode de réalisation, un procédé conforme à l'invention comprend, dans cet ordre, les étapes a), b), c), d), une étape de refroidissement de la poudre et une étape de tamisage et de broyage.

Selon un mode de réalisation, un procédé conforme à l'invention comprend, dans cet ordre, les étapes a), b1), b2), c), d), une étape de refroidissement de la poudre et une étape de tamisage et de broyage.

Selon un mode de réalisation, un procédé conforme à l'invention comprend, dans cet ordre, les étapes a), b), c), Cr, d), une étape de refroidissement de la poudre et une étape de tamisage et de broyage.

Selon un mode de réalisation, un procédé conforme à l'invention comprend, dans cet ordre, les étapes a), b1), b2), c), Cr, d), une étape de refroidissement de la poudre et une étape de tamisage et de broyage.

Selon un mode de réalisation, l'ensemble du procédé selon l'invention est effectué en continu, sans temps de repos intermédiaire.

Un procédé selon l'invention permet avantageusement de réduire la dénaturation des protéines solubles présentes dans le liquide contenant du lactose selon l'invention comparativement aux procédés traditionnels actuellement mis en oeuvre, ce qui permet de conférer à la poudre laitière ainsi obtenue, ou poudre contenant du lactose, d'avoir de meilleures propriétés nutritionnelles et organoleptiques.

Un procédé selon l'invention permet également avantageusement de conférer des propriétés microbiologiques égales, voire meilleure, à la poudre laitière obtenue via le procédé de l'invention comparativement à un procédé de l'état de la technique. L'étape de pulvérisation/atomisation mise en oeuvre dans ces procédés, et absente du procédé de l'invention, est en effet responsable d'une partie de la destruction de la flore bactérienne désirable initialement présente dans le liquide contenant du lactose mis en oeuvre dans le procédé de l'invention.

Les exemples ci-après sont donnés à titre illustratif et non limitatif.

### EXEMPLES

Des procédés conformes à l'invention ont été mis en oeuvre comme illustré ci-après, en utilisant à titre de liquide contenant du lactose selon l'invention soit un perméat préconcentré « frais », soit un sérum préconcentré « frais ». Par « frais », il est entendu que les sérums ou préconcentrés utilisés

Une première étape de concentration a été réalisée dans un évaporateur à flot tombant (évaporateur Frak Stab de FARCK Spa) (temps de passage dans le concentrateur de 10 à 20 minutes avec un débit d'alimentation de 1000L/h environ (entre 920 et 1035 L/h) avec pour température des 3 faisceaux 80°C/72°C/63°C et une pression partielle du vide de -0,75 bar). Le concentré obtenu à la sortie de l'évaporateur contenait une teneur en matière sèche allant de 57,3% à 63,1%.

Le concentré ainsi obtenu a par la suite subi une étape de cristallisation dans une cuve de 1000 litres (12h à 31°C) avant de passer dans un surconcentrateur Vomm (Avec un temps de passage de 2 à 10 minutes, à minimum 80°C). L'extrait surconcentré ainsi obtenu contenait une teneur en matière sèche moyenne de 76,85%.

Ces étapes sont réalisées en continu.

Par la suite, l'extrait surconcentré subit une étape de granulation via un granulateur, aboutissant à un extrait contenant une teneur en matière sèche allant de 89,1% à 92,3% (avec un temps de passage de 1 à 10 minutes, à minimum 62°C, dans un surconcentrateur/granulateur Vomm). La poudre sèche ajoutée à l'extrait surconcentré durant cette étape de granulation consistait soit en une poudre commerciale, soit en une poudre obtenue précédemment à l'aide d'un procédé selon l'invention.

Enfin, l'extrait obtenu après granulation est séché (avec un temps de passage de 5 à 10 minutes à 100°C minimum, dans un surconcentrateur/granulateur Vomm), ce qui permet d'obtenir une poudre contenant une teneur en matière sèche allant de 96,4% à 98,2%.

Ces étapes de granulation et de séchage sont réalisées de façon discontinue (30 minutes entre chaque étape, à température ambiante, dans des cuves agitées ou non).

Les propriétés des poudres de perméat et de lactosérum (composition biochimique, distribution de taille, couleur, indices d'écoulement et d'éboulement, hygroscopicité, densités et propriétés de réhydratation) ont été comparées à des poudres commerciales dites « de haute fluidité non hygroscopique », qui sont des poudres de qualité supérieure aux poudres commerciales standards.

Ces propriétés sont illustrées dans les tableaux 1 et 2 ci-après.

**Tableau 1 : poudre de lactosérum**

| | **Poudre de lactosérum selon l'invention** | **Poudre Témoin** |
|---|---|---|
| Extrait sec (g. kg⁻¹) | 969,2 | 965,5 |
| Distribution granulométrie d(0,5) µm | 185 | 153 |
| Couleur (L, a, b) | (71,66; -5,86; 15,78) | (74,52 ; -7,1 ; 15,78) |
| Indice d'éboulement (-) | 63 | 59 |
| Indice d'écoulement (-) | 70 | 77 |
| Masse volumique aérée (kg.m⁻³) | 616 | 559 |
| Dispersibilité (%) | 97,2 | 96,6 |
| Mouillabilité (s) | >120 | >120 |
| Solubilité (%) | 99,5 | 99,5 |

**Tableau 2 : poudre de perméat**

| | **Poudre de perméat selon l'invention** | **Poudre Témoin** |
|---|---|---|
| Extrait sec (g.kg⁻¹) | 964,1 | 971,8 |
| Distribution granulométrie d(0,5) µm | 200 | 125 |
| Couleur (L, a, b) | (69,29 ; -4,7 ; 17,03) | (72,62 ; -5,4 ; 16,89) |
| Indice d'éboulement (-) | 50 | 53 |
| Indice d'écoulement (-) | 78 | 70 |
| Masse volumique aérée (kg.m⁻³) | 527 | 528 |
| Dispersibilité (%) | 96,5 | 97,1 |
| Mouillabilité (s) | 2 | 14 |
| Solubilité (%) | 100 | 100 |

Les poudres préparées selon le procédé de l'invention s'avèrent posséder des propriétés équivalentes à celles de haute qualité disponibles sur le marché, à ceci prêt qu'elles possèdent une taille de particules légèrement supérieure à celle des poudres commerciales.

## Revendications

1. Procédé de préparation d'une poudre contenant du lactose comprenant les étapes successives de :
a) Concentration d'un liquide comprenant du lactose choisi parmi du lait entier, du lait partiellement ou totalement écrémé; du lactosérum ; et du perméat issu de filtrations membranaires de lait ou de lactosérum, pour obtenir un liquide concentré ayant une teneur en matière sèche allant 55 % à 65 %, en utilisant un évaporateur tubulaire à flot tombant, l'étape a) de concentration étant conduite sous vide à une température comprise entre 45 et 75°C, pour une durée allant de 10 à 20 minutes;
b) Surconcentration du concentré obtenu à l'issue de l'étape a) pour obtenir un produit surconcentré ayant une teneur en matière sèche allant de 75 % à 80 %, l'étape b) de surconcentration ayant une durée variant de 2 à 10 minutes;
c) Granulation du surconcentré obtenu à l'issue de l'étape b) par mélange dudit surconcentré avec une poudre contenant du lactose ayant une teneur en matière sèche d'au moins 95 %, jusqu'à obtenir une poudre granulée ayant une teneur en matière sèche d'au moins 85 % d'extrait sec ; et
d) Séchage de la poudre granulée obtenue à l'issue de l'étape c) pour obtenir une poudre contenant du lactose ayant une teneur en matière sèche d'au moins 95 %, où l'étape b) comprend :
- une étape b1) de surconcentration du concentré obtenu à l'issue de l'étape a) et
- une étape b2) de cristallisation du concentré obtenu à l'étape a) et/ou du surconcentré obtenu à l'issue de l'étape b1), selon que l'étape b2) a lieu antérieurement, simultanément ou postérieurement à l'étape b1),
ledit procédé ne comprenant pas d'étape de séchage par atomisation.

2. Procédé selon la revendication 1, **caractérisé en ce que** l'étape b2) de cristallisation est réalisée en cuve à une température variant de 25 à 30 °C, avantageusement pendant une durée variant de 4 à 12 heures.

3. Procédé selon l'une quelconque des revendications 1 à 2, **caractérisé en ce que** l'étape b) est réalisée dans un évaporateur horizontal rotatif à couche mince.

4. Procédé selon l'une quelconque des revendications 1 à 3, **caractérisé en ce que**, lors de l'étape c), le surconcentré est mélangé avec une poudre contenant du lactose obtenue lors d'un précédent cycle de réalisation dudit procédé de préparation.

5. Procédé selon l'une quelconque des revendications 1 à 4, **caractérisé en ce que** l'étape c) est réalisée avec une poudre contenant du lactose ayant une teneur en matière sèche d'au moins 97 %, de préférence une teneur en matière sèche d'au moins 98%. VOM056WEP

6. Procédé selon l'une quelconque des revendications 1 à 5, **caractérisé en ce qu'**il comprend une étape Cr de cristallisation sur bande à température ambiante entre les étapes c) et d).

7. Procédé selon l'une quelconque des revendications 1 à 6, **caractérisé en ce que** la poudre granulée obtenue à l'étape c) ou Cr est séchée à l'étape d) jusqu'à obtenir une poudre ayant une teneur en matière sèche d'au moins 97 %, de préférence une teneur en matière sèche d'au moins 98 %.

8. Procédé selon l'une quelconque des revendications 1 à 7, **caractérisé en ce que** l'étape d) de séchage est réalisée sur un lit fluidisé ou dans un évaporateur horizontal rotatif à couche mince.

9. Procédé selon l'une quelconque des revendications 1 à 8, **caractérisé en ce que** la poudre contenant du lactose obtenue à l'issue de l'étape d) est ensuite tamisée et broyée.

## Patentansprüche

1. Verfahren zur Herstellung eines Laktose enthaltenden Pulvers, umfassend die aufeinander folgenden Schritte:
a) Konzentrieren einer Laktose enthaltenden Flüssigkeit, gewählt aus Vollmilch, teilweiser entrahmter oder vollständig entrahmter Milch; Molke; und einem durch Membranfiltration von Milch oder Molke erhaltenen Permeat, um eine konzentrierte Flüssigkeit mit einem Trockensubstanzgehalt von 55% bis 65% zu erhalten, unter Verwendung eines Fallfilmverdampfers in Rohrbauweise, wobei der Schritt a) des Konzentrierens unter Vakuum bei einer Temperatur zwischen 45°C und 75°C während einer Dauer von 10 bis 20 Minuten durchgeführt wird;
b) Überkonzentrieren des am Ende von Schritt a) erhaltenen Konzentrats, um ein überkonzentriertes Produkt mit einem Trockensubstanzgehalt im Bereich von 75% bis 80% zu erhalten, wobei der Schritt b) des Überkonzentrierens sich über eine Dauer variierend zwischen 2 und 10 Minuten erstreckt;
c) Granulieren des am Ende von Schritt b) erhaltenen Superkonzentrats durch Mischen des Superkonzentrats mit einem Laktose enthaltenden Pulver, das einen Trockensubstanzgehalt von mindestens 95% aufweist, bis ein granuliertes Pulver mit einem Trockensubstanzgehalt von mindestens 85%, bezogen auf den Trockenextrakt, erhalten wird; und
d) Trocknen des am Ende von Schritt c) erhaltenen granulierten Pulvers, um ein Laktose enthaltendes Pulver mit einem Trockensubstanzgehalt von mindestens 95% zu erhalten,
wobei Schritt b) umfasst:
- einen Schritt b1) des Überkonzentrierens des am Ende von Schritt a) erhaltenen Konzentrats, und
- einen Schritt b2) des Kristallierens des in Schritt a) erhaltenen Konzentrats und/oder des am Ende von Schritt b1) erhaltenen Superkonzentrats, abhängig davon, ob der Schritt b2) vor, gleichzeitig mit oder nach dem Schritt b1) erfolgt,
wobei das Verfahren keinen Sprühtrocknungsschritt umfasst.

2. Verfahren nach Anspruch 1, **dadurch gekennzeichnet, dass** der Schritt b2) durch Kristallisation in einem Behälter bei einer Temperatur im Bereich von 25°C bis 30°C, vorzugsweise während eines Zeitraums im Bereich von 4 bis 12 Stunden, durchgeführt wird.

3. Verfahren nach einem der Ansprüche 1 bis 2, **dadurch gekennzeichnet, dass** der Schritt b) in einem Dünnschicht-Rotationsverdampfer in horizontaler Bauweise durchgeführt wird.

4. Verfahren nach einem der Ansprüche 1 bis 3, **dadurch gekennzeichnet, dass** während des Schritts c) das Superkonzentrat mit einem Laktose enthaltenden Pulver, welches in einem vorhergehenden Arbeitsschritt bei der Durchführung des Herstellungsverfahrens erhalten wird, gemischt wird.

5. Verfahren nach einem der Ansprüche 1 bis 4, **dadurch gekennzeichnet, dass** der Schritt c) mit einem Laktose enthaltenden Pulver durchgeführt wird, das einen Trockensubstanzgehalt von mindestens 97%, vorzugsweise einen Trockensubstanzgehalt von mindestens 98%, aufweist.

6. Verfahren nach einem der Ansprüche 1 bis 5, **dadurch gekennzeichnet, dass** das Verfahren einen Schritt Cr des Band-Kristallierens bei Raumtemperatur zwischen den Schritten c) und d) umfasst.

7. Verfahren nach einem der Ansprüche 1 bis 6, **dadurch gekennzeichnet, dass** das granulierte Pulver, das in Schritt c) oder Cr erhalten wird, in Schritt d) getrocknet wird, bis ein Pulver mit einem Trockensubstanzgehalt von mindestens 97%, vorzugsweise mit einem Trockensubstanzgehalt von mindestens 98%, erhalten wird.

8. Verfahren nach einem der Ansprüche 1 bis 7, **dadurch gekennzeichnet, dass** der Schritt d) des Trocknens im Fließbett oder in einem Dünnschicht-Rotationsverdampfer in horizontaler Bauweise durchgeführt wird.

9. Verfahren nach einem der Ansprüche 1 bis 8, **dadurch gekennzeichnet, dass** das am Ende von Schritt d) erhaltene Laktose enthaltende Pulver anschließend gesiebt und gemahlen wird.

## Claims

1. A process for preparing a lactose-containing powder comprising the sequential steps of:
a) concentration of a lactose-comprising liquid selected from whole milk, partially skimmed or totally skimmed milk; whey; and a permeate from membrane filtration of milk or whey, to obtain a concentrated liquid having a dry matter content of from 55% to 65%, using a tubular falling film evaporator, the step a) of concentration being carried out under vacuum at a temperature of between 45° and 75°C, for a duration of 10 to 20 minutes;
b) over-concentration of the concentrate obtained at the end of step a) to obtain an over-concentrated product having a dry matter content ranging from 75% to 80%, the step b) of over-concentration having a duration varying from 2 to 10 minutes;
c) granulation of the over-concentrate obtained at the end of step b) by mixing said over-concentrate with a lactose-containing powder having a dry matter content of at least 95%, until a granulated powder having a dry matter content of at least 85% of dry extract is obtained; and
d) drying of the granulated powder obtained at the end of step c) to obtain a lactose-containing powder having a dry matter content of at least 95%,
wherein step b) comprises:
- a step b1) of over-concentration of the concentrate obtained at the end of step a) and
- a step b2) of crystallization of the concentrate obtained in step a) and/or of the over-concentrate obtained at the end of step b1), depending on whether step b2) takes place previously, simultaneously or subsequently to step b1),
wherein the process does not comprise any step of spray drying.

2. The process according to claim 1, **characterized in that** step b2) is carried out by crystallization tank at a temperature ranging from 25 to 30°C, preferably for a period ranging from 4 to 12 hours.

3. The process according to any one of claims 1 to 2, **characterized in that** step b) is carried out in a horizontal rotary thin-layer evaporator.

4. The process according to any one of claims 1 to 3, **characterized in that**, during step c), the over-concentrate is mixed with a lactose-containing powder obtained in a previous cycle of implementation of said process of preparation.

5. The process according to any one of claims 1 to 4, **characterized in that** step c) is carried out with a lactose-containing powder having a dry matter content of at least 97%, preferably a dry matter content of at least 98%.

6. The process according to any one of claims 1 to 5, **characterized in that** it comprises a step Cr of belt crystallization at room temperature between steps c) and d).

7. The process according to any one of claims 1 to 6, **characterized in that** the granulated powder obtained in step c) or Cr is dried in step d) until a powder having a dry matter content of at least 97%, preferably a dry matter content of at least 98%, is obtained.

8. The process according to any one of claims 1 to 7, **characterized in that** step d) of drying is carried out on a fluidized bed or in a horizontal rotary thin-layer evaporator.

9. The process according to any one of claims 1 to 8, **characterized in that** the lactose-containing powder obtained at the end of step d) is then sieved and milled.
